# EUROPEAN PATENT APPLICATION

(11) **EP 1 036 647 A1**
(43) Date of publication of application: **20.09.2000**
(21) Application number: 99105262.2
(22) Date of filing: 15.03.1999
(51) Int. Cl.: B29D 31/515, A43B 17/14

(54) **Method for making an integral foamed insole with a sole body**

(71) Applicant: Chi, Cheng-Hsian, Taichung, Taiwan, R.O.C. (TW)
(72) Inventor: Chi, Cheng-Hsian, Taichung, Taiwan, R.O.C. (TW)
(74) Representative: Pohlmann, Eckart, Dipl.-Phys.

(57) **Abstract**

A method for making an integral foamed insole with a sole body comprising the steps of: stirring a composition of predetermined proportions of ethylene vinyl acetate, foaming agent, and bridge agent to form a molding mixture ; flattening and cutting, or injecting said molding mixture into a plurality of scale-down blanks of insole; heat foaming each of said blanks in a shaping mold (A1) at a temperature of 180°C for a predetermined period of time; opening the mold (A1) to allow said blank exposing and expanding in the open air as a final size of insole completely in a state of high temperature; and placing said insole in a cold forming mold (B1) to be embossed or pressed with a sole, a sole with an instep, or a cloth cover.

## Description

### BACKGROUND OF THE INVENTION

### 1. Field of the Invention

The present invention relates to a method for making an integral foamed insole with a sole body.

### 2. Description of Related Art

A common sports shoe usually has a sole body made of foaming material containing ethylene vinyl acetate (EVA) and the sole body comprises an insole, a sole glued to the insole, and a peripheral ornamental strip glued around the insole. The foaming material is formed by that a stirred mixture consisting of predetermined proportions of EVA, foaming agent, and bridge agent is foamed by heat. Therefore, the foaming material offers the shoe a better elasticity and durability. In addition, it is able to absorb unfavorable shocks, and it is comfortable for the user to wear the shoe.

The present inventor has disclosed a "Production Method for EVA Insoles with Peripheral Borders" (Taiwan Patent Publication No. 287091), in which a manufacturing process for foamed insole is taught. Therein, a foamed insole is surrounded and glued by an ornamental strip. The present inventor has also disclosed a "Production Method for Peripheral Ornamental stripes for foamed insoles" (U.S. Patent No. 5,843,352), in which a manufacturing process of ornamental strips is introduced. In the method, a mixed foaming material is made into a scale-down blank of ornamental strip. Then, the blank is put in a heat forming mold or pattern embossing mold of reduced or equal scale to yield an ornamental strip or a pattern embossed strip. But, it can be understood that the insole and the ornamental strip in addition to a sole have to be foamed into shape separately before they are glued together to form a sole body. Therefore, The prior art not only requires expensive mold but also offers complicated processing steps. Furthermore, the ornamental strip, the insole and the sole are glued together by heat rather than foamed into a single body. It is possible for the joints among the ornamental strip, the insole, and the sole to loose easily during rapid movements such that the ornamental strip easily falls off. In order to overcome the drawbacks described above, the conventional manufacturing process for a sole body has to be improved effectively such that the heat glue part is reduced and the integral foaming part is increased to intensify the integral construction of the sole body.

### SUMMARY OF THE INVENTION

It is the object of the present invention to provide a method for making an integral EVA insole with a sole body. The method comprises preparing a mixture consisting of predetermined proportions of EVA, foaming agent, and bridge agent, and the mixture are stirred to form a foamed material; then either cut and flatten or inject the foamed material into scale-down blanks of insole; the scale-down blanks each is pressed in a shaping mold A1 and heat foamed at a temperature of 180°C for a preset period of time; the compressed blank is exposed to the open air after taking out of the mold A1 and integrally expand completely into a structure of expanded insole in a state of high temperature; place the expanded insole in a cold forming mold B1 of equal size to be cooled down and embossed a pattern. In order to ensure a pattern embossing around the expanded insole, a heater can be used to instantly heat up the mold B1 locally. A further embodiment according to the present invention provides that the expanded insole in a state of high temperature is placed in a cold forming mold B2 of equal size with a sole coated with glue. The insole is pressed to glue with the sole in the mold B2. In a same way, the expanded insole in a state of high temperature is placed in a cold forming mold B3 of equal size with a cloth cover coated with glue. The insole is pressed to glue with the cloth cover. The cold mold B2 or B3 can be instantly heated up locally to assure a semi-product of an integral insole with a sole or a semi-product of foot pad is possible to make completely. A further embodiment according to the present invention provides that the expanded insole in a state of high temperature is placed in a cold forming mold B4 of equal size with a sole and an instep coated with glue. The insole, the sole, and the instep are pressed and glued together in the cold mold B4 and formed a product of EVA sole body. The mold B4 can be instantly heated up locally to ensure a complete product is made. Therefore, the present invention offers a method to make an integral insole with a sole, a cloth cover, or a sole with instep of intensified strength, giving the final product better value. The manufacturing method of the present invention allows the equipment and the process used to be adjusted to meet different needs of accuracy in making the shoe, decreasing cost and required working time. Furthermore, the present invention has no a great deal of material residue generated as in the prior art and has a less contamination to the environment.

The present invention can be more fully understood by reference to the following description and accompanying drawings.

### BRIEF DESCRIPTION OF THE DRAWINGS

Fig. 1 is a flow chart for the manufacturing process according to the present invention.

Fig. 2 is a perspective view showing a scale-down insole blank, a foamed insole, and a foamed insole with embossed pattern.

Fig. 3 is a perspective view showing a foamed insole and sole for gluing together.

Fig. 4 is a perspective view of a foot pad made from the present invention.

Fig. 5 is a perspective view showing a foamed insole, a sole, and an instep gluing together.

### DETAILED DESCRIPTION OF THE PREFERRED EMBODIMENTS

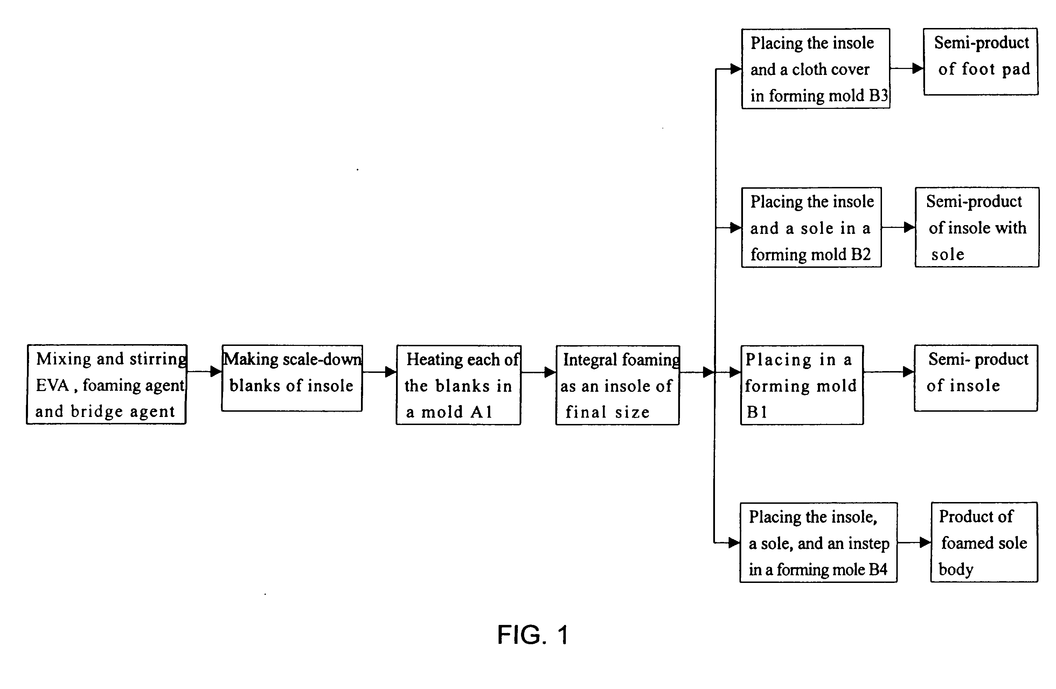

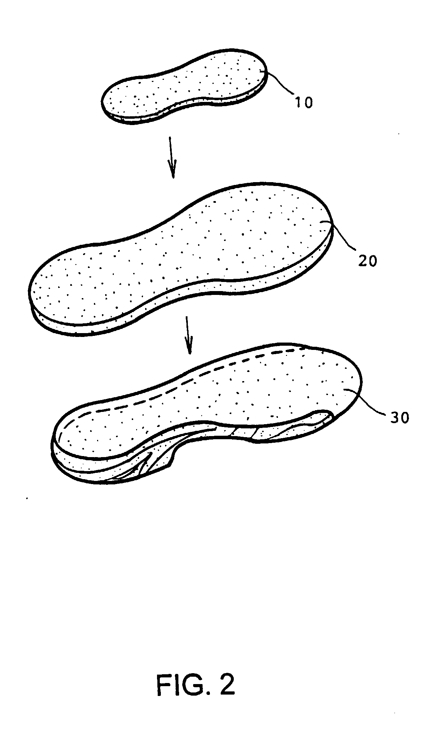

Referring to Fig. 1 and Fig. 2, a method making integral foaming insole with a sole body in a first embodiment according to the present invention illustrated. Predetermined proportions of ethylene vinyl acetate (EVA), foaming agent and bridge agent are mixed and stirred well to form a foamed material. The foamed material is flattened and cut into scale-down blanks 10 of insole. Every scale-down blank of insole is put into a shaping mold A1 and exposed to a temperature of 180°C. In the mold Al, the blank undergoes pressure. After a predetermined period of time, the mold A1 is opened, the blank gets into contact with air and expands to a final size of insole 20 in a state of high temperature. Then, place the expanded insole 20 in a cold forming mold B1 of equal size to be embossed a pattern thereon. In order to reach a sound embossing job, a heater can be used to instantly heat up the mold B1 locally. Therefore, a semi-product of an insole with an embossed pattern can be made through the cold forming process. It is noted that if the expanded insole 20 has cooled down before being placed in the mold B1, it is necessary to heat up the expanded insole 20 by a heating device first.

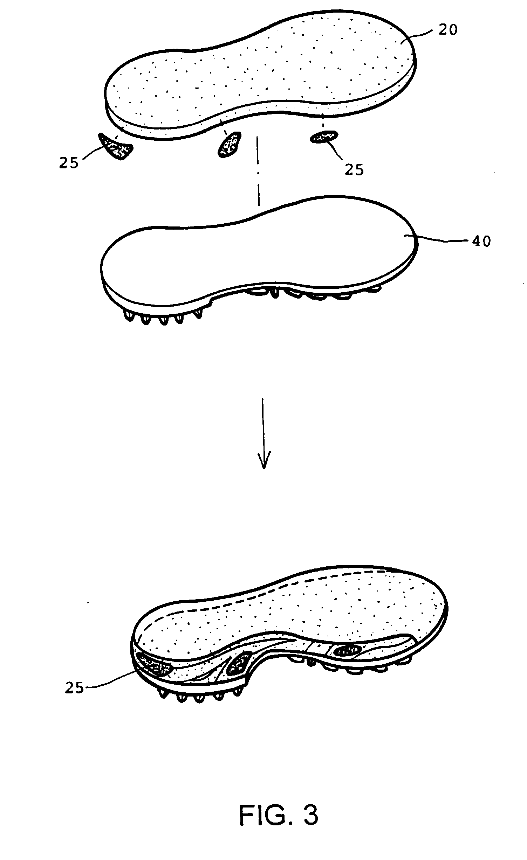

Referring to Fig. 3 accompanying with the flow chart shown in Fig. 1, the expanded insole 20 in a state of high temperature can be placed in a cold forming mold B2 of equal size together with a sole 40 coated with glue. Several pieces of platelets 25 in different shapes, colors, and materials can be laid in the mold B2 in advance to correspond to the border of the insole located in the mold B2. Then, the insole 20, the sole 40, and the platelets 25 are thermally glued together in the mold B3. In order to reach a better gluing job, a heater can be used to instantly heat up the mold B2 locally. Therefore a semi-product of integral insole with a sole and platelets can be made completely.

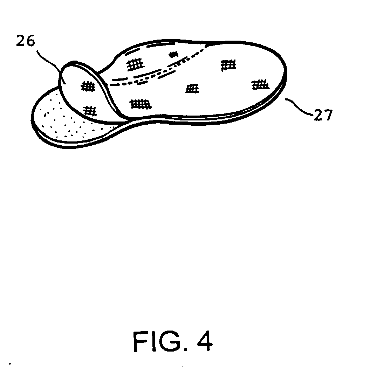

Referring to Fig. 4 accompanying with the flow chart shown in Fig. 1, the expanded insole 20 in a state of high temperature can be placed in a cold forming mold B3 of equal size together with a cloth cover 26 coated with glue. Then, the insole 20 and the cloth cover 26 are glued together in the mold B3. Therefore, a semi-product of foot pad 27 having a cloth cover 26 can be made completely.

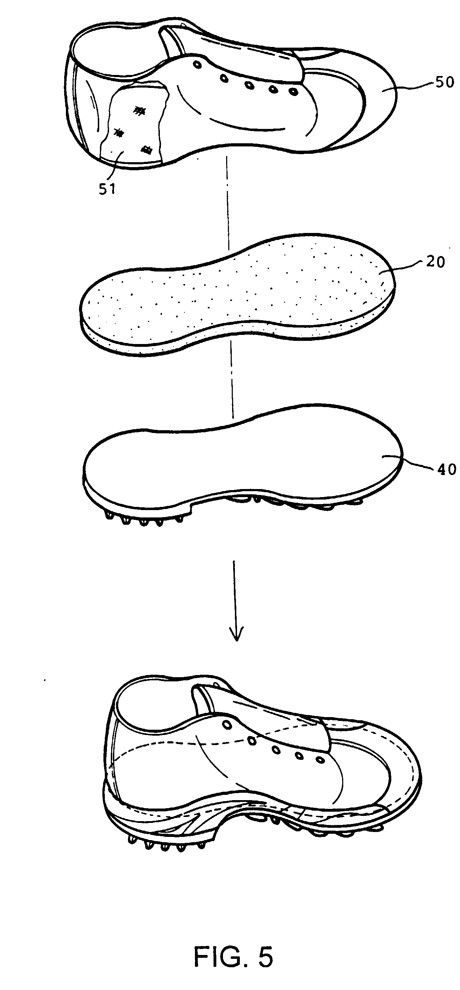

Referring to Fig. 5 accompanying with the flow chart shown in Fig. 1, the expanded insole 20 in a state of high temperature can be placed in a cold forming mold B4 of equal size together with a sole 40 and an instep 50. It is noted that the sole 40 is coated with glue at the upper surface thereof, and the instep 50 is coated with glue at the inner layer 51 thereof. Then, the insole 20, the sole 40, and the instep 50 are pressed together in the mold B4. In order to reach a better gluing job, a heater can be used to instantly heat up the mold B4 locally. Therefore, a product of an integrally foamed sole body can be made completely.

Furthermore, an inner boot also can be made by the present invention. First, the foamed mixture is injected into scale-down blanks of inner boot. Then, each of the blanks is heated and expanded in a shaping mold to foam into a final size of inner boot. The expanded inner boot is placed in a cold forming mold together with a cloth cover. The inner boot and the cloth cover then glue together in the forming mold. Therefore, an inner boot with a cloth cover is made completely.

While the invention has been described with reference to preferred embodiments thereof, it is to be understood that modifications or variations may be easily made without departing from the scope and spirit of this invention which is defined by the appended claims.

## Claims

1. A method for making an integral foamed insole with a sole body comprising the steps of:
stirring a composition of predetermined proportions of ethylene vinyl acetate, foaming agent, and bridge agent to form a molding mixture;
flattening and cutting, or injecting said molding mixture into a plurality of scale-down blanks of insole;
heat foaming each of said blanks in a shaping mold (A1) at a temperature of 180°C for a predetermined period of time;
opening the mold (A1) to allow said blank exposing and expanding in the open air as a final size of insole completely in a state of high temperature; and
placing said insole in a cold forming mold (B1) to be embossed and cool down as an insole integrated with pattern embossing.

2. A method for making an integral foamed insole with a sole body comprising the steps of:
stirring a composition of predetermined proportions of ethylene vinyl acetate, foaming agent, and bridge agent to form a molding mixture;
flattening and cutting, or injecting said molding mixture into a plurality of scale-down blanks of insole;
heat foaming each of said blanks in a shaping mold (A1) at a temperature of 180°C for a predetermined period of time;
opening the mold (A1) to allow said blank exposing and expanding in the open air as an insole of final size completely in a state of high temperature; and
placing several pieces of platelets in different shapes, color, and materials in a cold forming mold (B2) ; and
placing said insole together with a sole coated with glue in said mold (B2)and the insole having a position corresponding to said several pieces of platelets, and the insole, the sole, and the platelets being pressed together and thermally glued as a semi-product of sole body.

3. A method for making an integral foamed insole with a sole body comprising the steps of:
stirring a composition of predetermined proportions of ethylene vinyl acetate, foaming agent, and bridge agent to form a molding mixture;
flattening and cutting, or injecting said molding mixture into a plurality of scale-down blanks of insole;
heat foaming each of said blanks in a shaping mold (A1) at a temperature of 180°C for a predetermined period of time;
opening the mold (A1) to allow said blank exposing and expanding in the open air as an insole of final size completely in a state of high temperature; and
placing said insole together with a cloth cover coated with glue in a cold forming mold (B3), and the insole and the cloth cover being pressed together and thermally glued in said mold (B3)as a semi-product of foot pad.

4. A method for making an integral foamed insole with a sole body comprising the steps of:
stirring a composition of predetermined proportions of ethylene vinyl acetate, foaming agent, and bridge agent to form a molding mixture;
flattening and cutting, or injecting said molding mixture into a plurality of scale-down blanks of insole;
heat foaming each of said blanks in a shaping mold (Al) at a temperature of 180°C for a predetermined period of time;
opening the mold (Al) to allow said blank exposing and expanding in the open air as an insole of final size completely in a state of high temperature; and
placing said insole together with a sole coated with glue and an instep coated with glue in a cold forming mold (B4), and the insole, the sole, and the instep being pressed together and thermally glued in said mold (B4)as a product of foamed sole body.
